# EUROPEAN PATENT APPLICATION

(11) **EP 4 496 106 A1**
(43) Date of publication of application: **22.01.2025**
(21) Application number: 23770150.3
(22) Date of filing: 07.02.2023
(51) Int. Cl.: H01M 50/505, H01M 50/107, H01M 50/152, H01M 50/167, H01M 50/213, H01M 50/227, H01M 50/503, H01M 50/516, H01M 50/588, H01M 50/591

(54) **BATTERY PACK**

(30) Priority: 14.03.2022 JP 2022039669
(71) Applicant: Panasonic Energy Co., Ltd., Osaka 570-8511 (JP)
(72) Inventor: FUKUDA, Shinsuke, Kadoma-shi, Osaka 571-0057 (JP)
(74) Representative: Novagraaf International SA
(86) International application number: PCT/JP2023/003888
(87) International publication number: WO 2023/176189

(57) **Abstract**

A battery pack includes: a plurality of battery cells in each of which an outer peripheral edge of a sealing plate is fixed to an opening of an outer covering can by an insulating gasket interposed therebetween; an outer covering case incorporating the plurality of battery cells; a lead plate that comprises metal, the lead plate being connected to electrodes of the sealing plates of adj acent battery cells among the plurality of battery cells to electrically connect the adjacent battery cells to each other; and a battery holder in which the plurality of battery cells are arranged at fixed positions. The battery holder includes an insulating cover arranged at a position facing the sealing plates and arranged between the sealing plates and the lead plate, the insulating cover includes a connection window that exposes the electrode of one of the adjacent battery cells and connects the lead plate at a position facing the sealing plate of the one of the adjacent battery cells, and the lead plate includes: a welded part that is guided by the connection window and welded to the electrode of the one of the adjacent battery cells; and a closing part that is arranged at the connection window and closes a gap between the insulating cover and the sealing plate of the one of the adjacent battery cells.

## Description

### TECHNICAL FIELD

The present invention relates to a battery pack in which a plurality of battery cells are arranged in an outer covering case.

### BACKGROUND ART

In a battery pack incorporating a plurality of battery cells, a metal lead plate is welded to electrodes of the battery cells to connect the battery cells in series or in parallel. In this battery pack, the lead plate is arranged on a surface facing an electrode end surface of a battery cell with an insulating plate interposed therebetween, and a connection arm of the lead plate is welded to an electrode on the electrode end surface. The insulating plate is provided with a connection window that exposes the electrode end surface, and the connection arm of the lead plate is guided to the connection window to weld the tip of the connection arm to the electrode of the battery cell (see Cited Literature 1).

In the connection structure described above, adjacent battery cells can be connected in series or in parallel by the lead plate, but when an unspecified battery cell opens due to thermal runaway, a problem that a high-temperature jetted matter discharged from a discharge valve of the battery cell causes a thermal failure to other battery cells cannot be solved. In particular, in a battery pack requiring a large output, a secondary battery such as a lithium ion battery having a high electromotive force and a high energy density is used as a battery cell, but these secondary batteries are provided with a discharge valve that opens when the internal pressure exceeds a threshold value because gas is generated inside due to overcharge, overdischarge, an internal short circuit, or an external short circuit and the internal pressure rises. When the valve is opened, the gas ejected from the discharge valve has a high temperature, which causes heating and catching fire of adjacent battery cells.

### Citation List

### Patent Literature

PTL 1: WO 2015/064097 A

### SUMMARY OF THE INVENTION

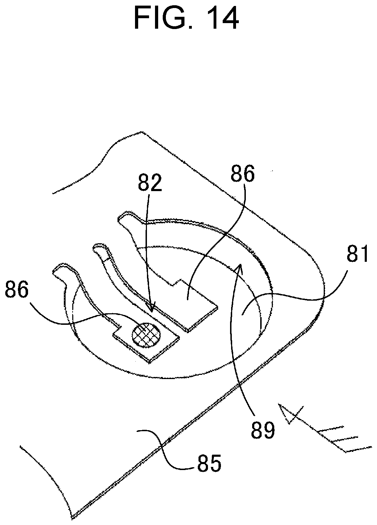

Fig. 14 is a perspective view of a part where connection arms 86 of a lead plate 85 are welded to an electrode 82 of a battery cell 81. In this connection structure, a gap 89 is formed between the lead plate 85 and the electrode end surface of the battery cell 81, so that a jetted matter passing through the gap 89 gives a thermal failure to other battery cells. The reason why the jetted matter passing through the gap between the lead plate and the electrode end surface gives a thermal failure to the electrode end surface is that an insulating gasket is arranged to insulate the battery cell from the sealing plate that closes the opening of the outer covering can. The insulating gasket is exposed to a high-temperature jetted matter, softens, and melts to cause a short circuit between the outer covering case and the sealing plate. The short circuit between the outer covering case and the sealing plate causes an excessive short circuit current to flow in the battery cell to generate heat by Joule heat and catch fire, which is a factor of inhibiting safety.

The present invention has been developed for the purpose of further solving the disadvantages described above, and an object of the present invention is to provide a battery pack that ensures safety by suppressing a high-temperature jetted matter discharged from a discharge valve of a battery cell from causing a thermal failure to other battery cells at the time of valve opening.

A battery pack according to an exemplary embodiment of the present invention includes: a plurality of battery cells in each of which an outer peripheral edge of a sealing plate is fixed to an opening of an outer covering can by an insulating gasket interposed therebetween; an outer covering case incorporating the plurality of battery cells; a lead plate that is a metal plate and connected to electrodes of the sealing plates of adjacent battery cells among the plurality of battery cells to electrically connect the adjacent battery cells to each other; and a battery holder in which the plurality of battery cells are arranged at fixed positions, in which the battery holder includes an insulating cover arranged at a position facing the sealing plates of the adjacent battery cells and arranged between the sealing plates of the adjacent battery cells and the lead plate, in which the insulating cover includes a connection window that exposes the electrode of one of the adjacent battery cells and connects the lead plate at a position facing the sealing plate of the one of the adjacent battery cells, and in which the lead plate includes: a welded part that is guided by the connection window and welded to the electrode of the one of the adjacent battery cells; and a closing part that is arranged at the connection window and closes a gap between the insulating cover and the sealing plate of the one of the battery cells.

The battery pack described above has an advantage that it is possible to secure safety by suppressing a high-temperature jetted matter discharged from the discharge valve of the battery cell from causing a thermal failure to other battery cells.

### BRIEF DESCRIPTION OF THE DRAWINGS

Fig. 1 is a schematic cross-sectional view of a battery pack according to an exemplary embodiment of the present invention.
Fig. 2 is an exploded perspective view of a battery assembly of the battery pack illustrated in Fig. 1.
Fig. 3 is an enlarged perspective view of the battery assembly illustrated in Fig. 2.
Fig. 4 is a plan view of the battery assembly illustrated in Fig. 3.
Fig. 5 is a bottom perspective view of an insulating cover of a battery holder illustrated in Fig. 3.
Fig. 6 is a schematic cross-sectional view of a battery pack according to another exemplary embodiment of the present invention.
Fig. 7 is an exploded perspective view illustrating a battery assembly of the battery pack and a lead plate illustrated in Fig. 6.
Fig. 8 is a schematic cross-sectional view of a battery pack according to another exemplary embodiment of the present invention.
Fig. 9 is a plan view illustrating another example of the lead plate.
Fig. 10 is a perspective view illustrating another example of the lead plate.
Fig. 11 is a perspective view illustrating another example of the insulating cover and the lead plate.
Fig. 12 is a perspective view illustrating another example of the insulating cover and the lead plate.
Fig. 13 is a perspective view illustrating a state in which a lead plate of a conventional battery pack is welded to protrusion electrodes.
Fig. 14 is a perspective view illustrating a state in which the lead plate of the conventional battery pack is welded to an electrode.

### DESCRIPTION OF EMBODIMENTS

A battery pack according to an embodiment of the present invention includes: a plurality of battery cells in each of which an outer peripheral edge of a sealing plate is fixed to an opening of an outer covering can by an insulating gasket interposed therebetween; an outer covering case incorporating the plurality of battery cells; a lead plate that is a metal plate and connected to electrodes of the sealing plates of adjacent battery cells among the plurality of battery cells to connect the adjacent battery cells to each other; and a battery holder in which the plurality of battery cells are arranged at fixed positions. The battery holder includes an insulating cover arranged at a position facing the sealing plates of the adjacent battery cells and arranged between the sealing plates of the adjacent battery cells and the lead plate, the insulating cover includes a connection window that exposes the electrode of one of the adjacent battery cells and connects the lead plate at a position facing the sealing plate of the one of the adjacent battery cells, and the lead plate includes: a welded part that is guided by the connection window and welded to the electrode of the one of the adjacent battery cells; and a closing part that is arranged at the connection window and closes a gap between the insulating cover and the sealing plate of the one of the adjacent battery cells.

The battery pack described above has an advantage that it is possible to prevent an adverse effect caused by softening or melting of the insulating gasket of the battery cell due to a high-temperature and high-pressure jetted matter caused by thermal runaway of any of the battery cells, and it is possible to prevent induction of thermal runaway of the battery cell to secure safety. The battery cell that has thermally run away may discharge a high-temperature and high-pressure jetted matter, but when the jetted matter comes into contact with an insulating gasket hermetically sealed in a state of insulating the outer covering can and the sealing plate from each other, the insulating gasket receives a thermal failure, and the outer covering can and the sealing plate cannot be held in an insulated state. In the battery cell in this state, an excessive short-circuit current flows between the outer covering can and the sealing plate to generate heat by Joule heat, which causes thermal runaway.

In the battery pack described above, the insulating cover including the connection window is arranged between the lead plate and the sealing plate of the battery cell, and the lead plate is provided with the welded part which is guided by the connection window of the insulating cover and welded to the electrode of the sealing plate, and the closing part which is arranged on the connection window and closes the gap between the insulating cover and the sealing plate. The closing part covers the exposed part of the insulating gasket to prevent the high-temperature jetted matter from contacting the insulating gasket. The insulating gasket that does not come into contact with the high-temperature jetted matter is not hindered by heat of the jetted matter, and holds the outer covering can and the sealing plate in an insulated state. Therefore, in the battery pack described above, the high-temperature jetted matter discharged from the battery pack that has thermally run away does not cause a thermal failure to the insulating gaskets of other battery cells arranged in the outer covering case. Therefore, it is possible to prevent the thermal runaway of the battery cell from causing the thermal runaway of another battery cell.

Further, in the battery pack described above, the closing part is provided on the lead plate welded to the electrode of the sealing plate in order to connect the battery cells, and the exposed part of the insulating gasket is covered with the closing part. Therefore, it is not necessary to provide a dedicated separate member in order to cover the insulating gasket, and the closing part can be provided by changing the cut shape of the lead plate manufactured by cutting the metal plate. For this reason, a feature that a large amount of highly safe battery packs can be produced at low cost while reducing the component cost and the assembly cost is also realized. Further, since the closing part is provided on the lead plate to be welded to the electrode of the sealing plate, a feature that, in the step of welding the lead plate to the electrode, the closing part can be arranged at an ideal position to cover the exposed part of the insulating gasket can also be realized. This also achieves the feature of reliably preventing a thermal failure of the insulating gasket while simplifying the assembly process.

In a battery pack according to another embodiment of the present invention, the sealing plate of the one of the adjacent battery cells includes a protrusion electrode at the central part of the sealing plate of the one of the adjacent battery cells, and a gap between the insulating cover and the protrusion electrode can be closed by the closing part by welding the welded part to the protrusion electrode exposed from the connection window of the insulating cover. In the battery pack described above, the gap between the insulating cover and the protrusion electrode is closed by the closing part while the welded part of the lead plate is welded to the protrusion electrode provided at the central part of the sealing plate, and the exposed part of the insulating gasket is reliably blocked from the contact of the jetted matter, so that the insulating gasket can be protected from the thermal failure of the high-temperature jetted matter.

In a battery pack according to another embodiment of the present invention, the lead plate can include a laminated part arranged on a surface of the insulating cover, the closing part has a closing stepped part formed by connecting a first side edge of the closing stepped part to the laminated part and connecting a second side edge of the closing stepped part to the welded part, and the closing stepped part closes the gap between the insulating cover and the sealing plate of the one of the adjacent battery cells. In the battery pack described above, the closing stepped part that connects both sides of the closing part to the laminated part laminated on the surface of the insulating cover and the welded part are provided on the lead plate, and the exposed part of the insulating gasket is covered with the closing stepped part. Therefore, the exposed part of the insulating gasket can be reliably shielded from the contact of the jetted matter by the closing stepped part, and the insulating gasket can be protected from the thermal failure of the high-temperature jetted matter.

This is because the closing stepped part covers the exposed part of the insulating gasket by connecting the upper edge to the laminated part of the insulating cover and connecting the lower edge to the welded part.

In a battery pack according to another embodiment of the present invention, the lead plate can have a pair of closing stepped parts connected to the welded part. In the battery pack described above, the pair of closing stepped parts can be arranged inside the connection window, and the closing part can be arranged inside the connection window without positional displacement. Therefore, there is an advantage that the closing stepped part can reliably cover the exposed part of the insulating gasket to prevent a thermal failure of the jetted matter. This is because since the pair of closing stepped parts are located inside the connection window, the closing part can be arranged at the cover position of the insulating gasket exposed part without positional displacement by setting the welded part in the connection window with both closing stepped parts abutting on the inside of the connection window.

In a battery pack according to another embodiment of the present invention, a boundary line between the closing stepped part and the welded part and a boundary line between the closing stepped part and the laminated part can be made linear. The battery pack described above has an advantage that the metal plate can be bent linearly to provide the closing stepped part and the welded part on the lead plate, so that the lead plate can be manufactured simply and easily and efficiently, and the insulating gasket can be prevented from a thermal failure by the lead plate.

In a battery pack according to another embodiment of the present invention, the closing part can have a closing outer peripheral edge that is close to an inner peripheral edge of the connection window and closes the gap between the insulating cover and the sealing plate of the one of the adjacent battery cells. In the battery pack described above, the shape of the metal plate to be cut is changed, the closing outer peripheral edge is provided on the lead plate, and the exposed part of the insulating gasket can be covered with the closing outer peripheral edge. Therefore, the lead plate can be manufactured simply and easily and efficiently, and the insulating gasket can be prevented from a thermal failure by the lead plate.

In a battery pack according to another embodiment of the present invention, the connection window and the closing outer peripheral edge can be formed in a curved shape along an outer peripheral edge of the protrusion electrode.

In a battery pack according to another embodiment of the present invention, the closing outer peripheral edge can have a closing wall arranged close to an inner peripheral edge of the connection window. The battery pack described above has an advantage that the gap between the insulating cover and the sealing plate can be closed by the closing wall arranged at the position to cover the inner peripheral surface of the connection window to more reliably cover the exposed part of the insulating gasket.

In a battery pack according to another embodiment of the present invention, the closing part can have a plurality of the closing stepped parts and a plurality of the closing outer peripheral edges, and one of the plurality of closing outer peripheral edges can be provided between the plurality of closing stepped parts. The battery pack described above has an advantage that the exposed part of the insulating gasket can be covered at both the closing stepped parts and the closing outer peripheral edges to prevent a thermal failure of the insulating gasket due to a high-temperature jetted matter. Further, since the closing outer peripheral edges which are not connected to the laminated part are provided between the closing stepped parts, the welded part can be deformed by being pressed. Therefore, there is an advantage that the exposed part of the insulating gasket can be covered while the welded part is reliably welded in close contact with the surface of the protrusion electrode.

In a battery pack according to another embodiment of the present invention, the connection window and the welded part can be made circular, an outer diameter of the welded part can be made smaller than an inner shape of the connection window, and the lead plate can have a circular cup shape with the welded part as a bottom surface, the closing stepped part as an outer peripheral wall, and the laminated part as a flange part on an outer periphery. The battery pack described above has an advantage of being able to produce a lead plate capable of reliably covering the exposed part of the insulating gasket and effectively preventing a thermal failure by pressing the metal plate. This is because the metal plate is pressed into a circular cup shape with the welded part as the bottom surface, the closing stepped part as the outer peripheral wall, and the laminated part as the flange part of the outer periphery to cover the exposed part of the insulating gasket in an ideal state, so that a thermal failure can be effectively prevented.

In a battery pack according to another embodiment of the present invention, the insulating cover can be configured as a part of a battery holder in which battery cells are arranged at fixed positions. The battery cell described above has an advantage that the lead plate is arranged at an accurate position with the insulating cover interposed therebetween, and the exposed part of the insulating gasket can be covered with the closing part of the lead plate without positional displacement. This is because the insulating cover is arranged at the correct position of the battery cell with the battery holder interposed therebetween, and the lead plate is connected to the connection window of the insulating cover arranged in the battery cell without positional displacement, so that the lead plate can be arranged at the correct position of the battery cell to cover the exposed part of the insulating gasket at the closing part of the lead plate.

In a battery pack according to another embodiment of the present invention, the insulating cover can comprises plastic as an insulating material.

In a battery pack according to another embodiment of the present invention, the insulating cover can include: a fitting recess into which one of the plurality of battery cells is inserted and arranged at a fixed position; and a fitting part formed by arranging the lead plate at a fixed position in a fitting structure.

In a battery pack according to another embodiment of the present invention, the fitting part of the insulating cover can be a positioning protrusion formed integrally with the insulating cover, and the lead plate can have a positioning hole into which the positioning protrusion is inserted.

Hereinafter, exemplary embodiments of the present invention will be described with reference to the drawings. However, the exemplary embodiments described below are examples for embodying the technical idea of the present invention, and the present invention is not limited to the exemplary embodiments described below. Moreover, in the present specification, members indicated in the claims are never specified to the members of the exemplary embodiments. In particular, the dimensions, materials, shapes, relative arrangements, and the like of the components described in the exemplary embodiments are not intended to limit the scope of the present invention exclusively unless otherwise specified, and are merely illustrative examples. Note that the sizes, positional relationships, or the like of members illustrated in the drawings may be exaggerated for clarity of description. In the following description, the same names and reference numerals indicate the same or similar members, and detailed description will be appropriately omitted. Furthermore, the elements constituting the present invention may be configured such that a plurality of elements are constituted of the same member to form one member that functions as the plurality of elements, or conversely, a function of one member can be shared and achieved by a plurality of members.

A battery pack according to the present invention is mainly used as a power source for motive power. This battery pack is used as a power source for electric devices driven by a motor, such as electric cleaners, electric tools, electric power-assisted bicycles, electric motorcycles, electric wheelchairs, electric tricycles, and electric carts. However, the present invention does not specify the use of the battery pack, and can also be used as a power source, a motive power source for moving means, and an auxiliary power source for various electrical devices used indoors or outdoors in electrical devices, for example, wireless devices or lighting devices, other than electric devices.

### [First exemplary embodiment]

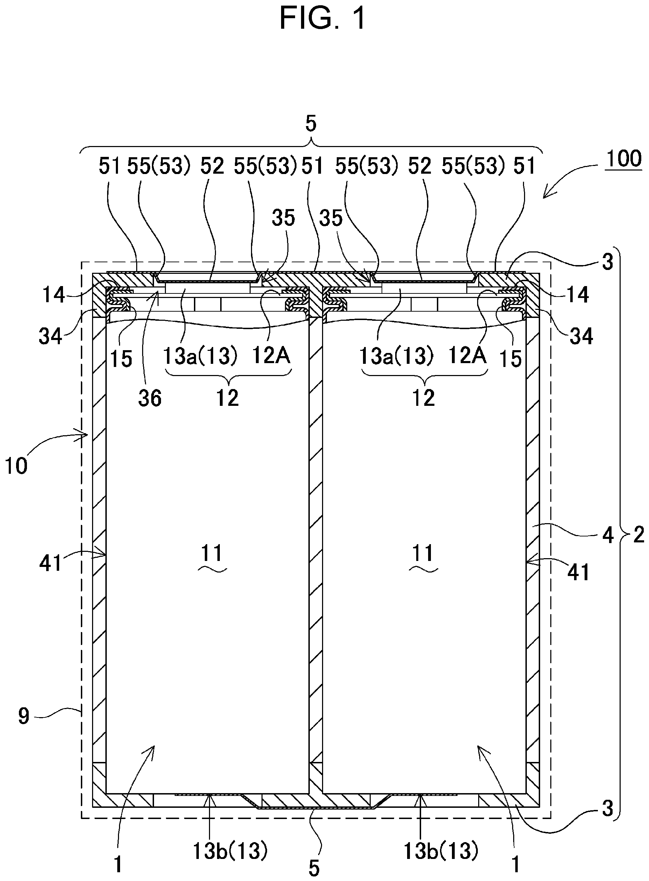

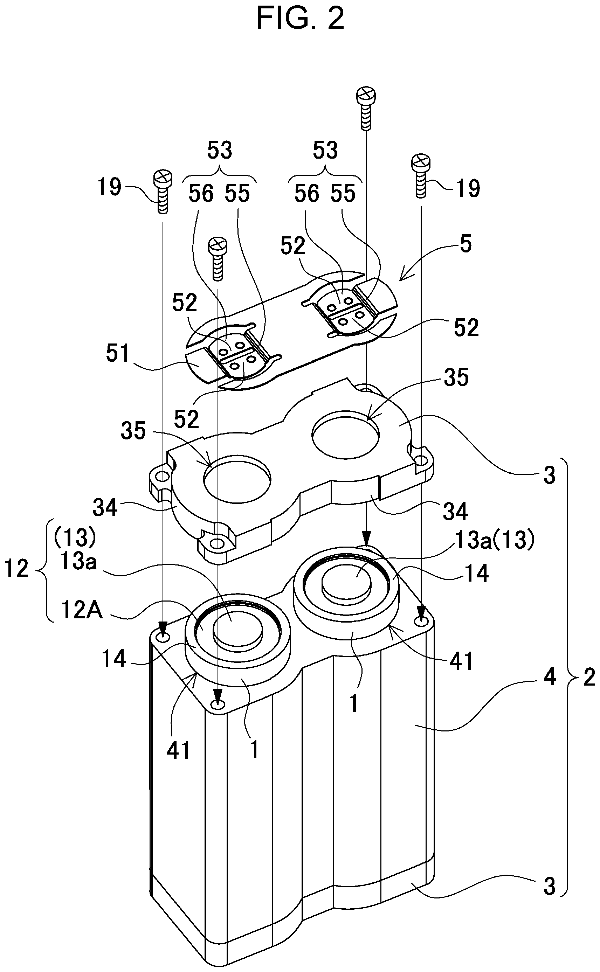

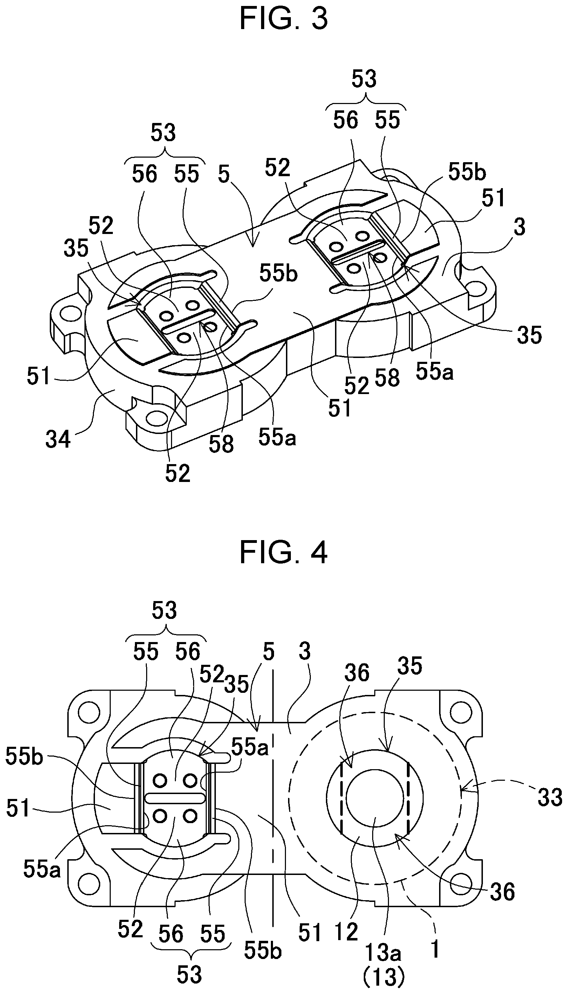

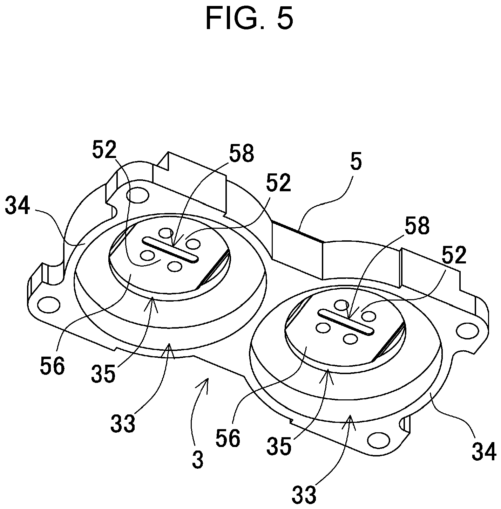

A battery pack according to a first exemplary embodiment of the present invention is illustrated in Figs. 1 to 5. In these drawings, Fig. 1 is a schematic cross-sectional view of a battery pack according to a first exemplary embodiment, Fig. 2 is an exploded perspective view of a battery assembly of the battery pack of Fig. 1, Figs. 3 and 4 are an enlarged perspective view and a plan view of the battery assembly of Fig. 2, and Fig. 5 is a bottom perspective view of an insulating cover of Fig. 3. These drawings illustrate battery pack 100 in which two battery cells 1 are stored in outer covering case 9, but the present invention does not specify the number of battery cells 1 stored in outer covering case 9, and the number of battery cells 1 is set to an optimum number in order to realize a capacity suitable for the application. In battery pack 100 in which a large number of battery cells 1 are stored in outer covering case 9, battery cells 1 can be connected in series or in parallel by connecting lead plates 5 described later to electrodes 13 provided at ends of adjacent battery cells 1 whose both ends are arranged on the same plane.

Battery pack 100 described above includes outer covering case 9, a plurality of battery cells 1 stored in outer covering case 9, battery holder 2 in which each battery cell 1 is arranged at a fixed position, and lead plates 5 connected to ends of battery cells 1. In battery cell 1, positive and negative electrodes 13 are provided on an end surface. Battery holder 2 includes main body holder 4 and insulating covers 3 vertically connected to main body holder 4. Battery holder 2 holds the plurality of battery cells 1 in a posture parallel to each other in the longitudinal direction, and holds electrodes 13 provided at both ends of each battery cell 1 in a posture arranged on the same plane. Insulating covers 3 are connected to the upper and lower sides of main body holder 4 to cover the end surfaces of battery cell 1, thereby arranging lead plates 5 at fixed positions. Lead plates 5 connect electrodes 13 of adjacent battery cells 1.

### (Outer covering case 9)

In outer covering case 9, the plurality of battery cells 1 are arranged at fixed positions by battery holder 2, and stored inside as battery assembly 10. Outer covering case 9 is molded into a hollow box shape by molding thermoplastic plastic. Outer covering case 9 is provided with a discharge opening (not illustrated) through which a jetted matter from an opened discharge valve of battery cell 1 is discharged to the outside. Since outer covering case 9 has a closed structure and stores battery assembly 10 therein, the jetted matter flows into the gap inside outer covering case 9 and causes a thermal failure to insulating gasket 15 of battery cell 1. Insulating gasket 15 is arranged between caulking part 14 of outer covering can 11 and sealing plate 12 in order to insulate outer covering can 11 and sealing plate 12, which are positive and negative electrodes.

### (Battery cell 1)

As battery cell 1, a nonaqueous electrolytic secondary battery such as a lithium ion battery having high energy efficiency is suitable. However, battery cell 1 is not limited to a lithium ion battery, and is a secondary battery in which the opening of outer covering can 11 is caulked and sealing plate 12 is fixed with insulating gasket 15 interposed therebetween, and all the secondary batteries in which the internal pressure increases and the discharge valve discharges the jetted matter can be used. Battery cell 1 is manufactured by storing an electrode body in metal outer covering can 11, filling an electrolytic solution, and airtightly closing the opening of outer covering can 11 with sealing plate 12. In battery cell 1, positive and negative electrodes 13 are provided at both ends. In battery cell 1, electrodes provided on a bottom surface of outer covering can 11 and a central part of sealing plate 12 which are both end surfaces are positive and negative electrodes 13. In battery cell 1 of Fig. 1, protrusion electrode 13a provided on sealing plate 12 and bottom surface electrode 13b of outer covering can 11 are provided as positive and negative electrodes 13 at both ends.

Exterior can 11 is formed by pressing a metal plate into a cylindrical shape with a closed bottom. Sealing plate 12 is manufactured by pressing a metal plate into a shape having protrusion electrode 13a at a central part. Sealing plate 12 is internally provided with a discharge valve (not illustrated). Furthermore, sealing plate 12 is provided with a discharge opening (not illustrated) around the protrusion electrode 13a so that the jetted matter discharged from the discharge valve to be opened can be discharged to the outside. In order to prevent rupture due to an increase in internal pressure, the discharge valve is opened to discharge a jetted matter when the internal pressure exceeds a threshold value. The discharge valve to be opened discharges a high-temperature jetted matter.

A cylindrical battery is suitable as battery cell 1. This is because the cylindrical battery can be insulated by insulating gasket 15 and hermetically sealed by sealing plate 12 by caulking the entire periphery of the opening of outer covering can 11. Since there is a potential difference between outer covering can 11 and sealing plate 12 which are the metal plates, insulating gasket 15 is sandwiched and insulated between caulking part 14 of outer covering can 11 and sealing plate 12. Since the opening of outer covering can 11 is caulked and sealed by sealing plate 12, insulating gasket 15 is sandwiched between caulking part 14 and sealing plate 12. In outer covering can 11 in which the opening edge part is bent inward by caulking, caulking part 14 presses insulating gasket 15 against the surface of sealing plate 12 to insulate and seal outer covering can 11 and sealing plate 12. In sealing plate 12 of Fig. 1, a metal plate is pressed, protrusion electrode 13a is provided at the central part, and the outside of protrusion electrode 13a is ring-shaped flat surface 12A. The outer peripheral edge part of ring-shaped flat surface 12A is pressed and sealed by caulking part 14 with insulating gasket 15 interposed between the outer peripheral edge part of ring-shaped flat surface 12A and outer covering can 11.

Insulating gasket 15 insulates outer covering can 11 and sealing plate 12 from each other to hermetically seal outer covering can 11 and sealing plate 12. Insulating gasket 15 is elastically deformed by being pressed by caulking part 14, and is brought into close contact with surfaces of caulking part 14 and sealing plate 12 to seal outer covering can 11 and sealing plate 12. Insulating gasket 15 is required to have heat resistance, electrolytic solution resistance, and insulation. For example, a super engineering plastic such as PPS or PTFE is used as insulating gasket 15 that realizes the physical properties. However, even in insulating gasket 15 having such excellent heat resistance, it is extremely difficult to realize the physical properties that withstand the temperature of the jetted matter discharged from the discharge valve. Insulating gasket 15 separates caulking part 14 and sealing plate 12 so as not to come into contact with each other and insulates the caulking part 14 and the sealing plate 12 from each other. Therefore, a gap is provided between caulking part 14 and sealing plate 12, and insulating gasket 15 is arranged in the gap. Therefore, the exposed part cannot be completely eliminated. When the exposed part of insulating gasket 15 is exposed to a high-temperature jetted matter, caulking part 14 and sealing plate 12 cannot be maintained in an insulated state due to a thermal failure. Exterior can 11 and sealing plate 12, which cannot be held in an insulated state by insulating gasket 15, cause an excessive short-circuit current to flow, which hinders safety.

### (Battery holder 2)

Battery holder 2 stores battery cell 1 therein and is arranged at a fixed position. In battery holder 2 of Figs. 1 and 2, main body holder 4 and insulating cover 3 are separately formed of thermoplastic plastic, and insulating covers 3 are connected to upper and lower sides of main body holder 4 to arrange the plurality of battery cells 1 at fixed positions. In main body holder 4, battery cells 1 are inserted into a plurality of storage parts 41 formed in a posture parallel to each other, and the plurality of battery cells 1 are arranged in a posture parallel to each other. In battery holder 2, insulating cover 3 is fixed to main body holder 4, and electrodes 13 provided at both ends of each battery cell 1 are arranged on the same plane.

Insulating cover 3 of Fig. 2 is fixed to main body holder 4 with set screws 19 penetrating the corners. Set screws 19 penetrate the four corners of insulating cover 3 and are screwed into main body holder 4 to fix insulating cover 3 at a fixed position of main body holder 4. In main body holder 4 illustrated in Fig. 2, after battery cells 1 are inserted, insulating covers 3 are connected to arrange battery cells 1 at fixed positions. Main body holder 4 holds inserted battery cells 1 at intermediate parts and holds battery cells 1 at fixed positions. Insulating covers 3 insulate end surfaces of battery cells 1 inserted into main body holder 4 to arrange lead plates 5 at fixed positions.

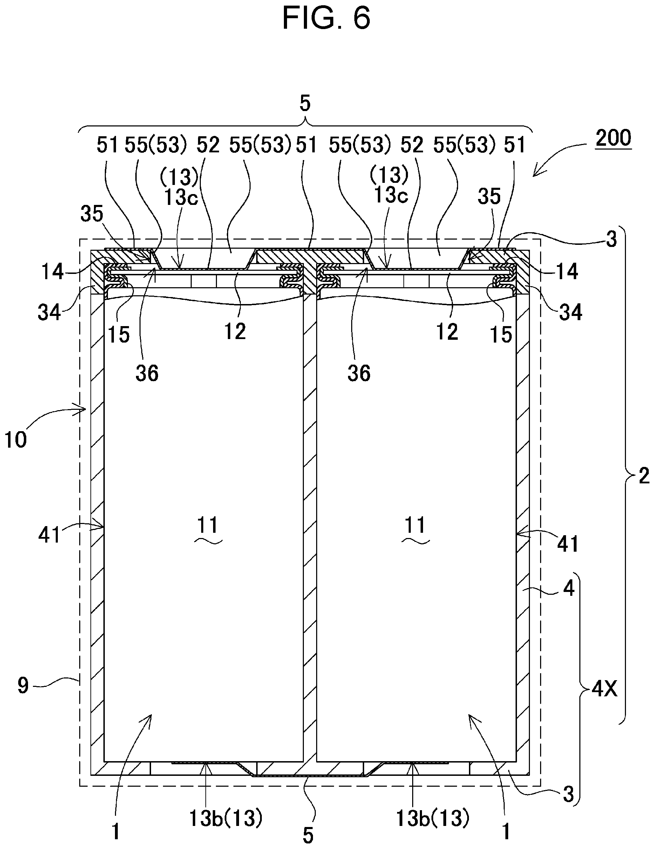

Insulating cover 3 illustrated in the bottom perspective view of Fig. 5 is provided with fitting recesses 33 into which the ends of battery cells 1 are inserted. Insulating cover 3 in the drawing is provided with fitting recesses 33 that are each provided with inner peripheral wall part 34 along the outer periphery of battery cell 1 and each guide battery cell 1. Fitting recess 33 is a circular recess to hold the outer peripheral surface of the end of battery cell 1 so that the end of the cylindrical battery can be fitted. As illustrated in Figs. 1 and 2, main body holder 4 is provided with storage parts 41 into which battery cells 1 are inserted. The openings of fitting recesses 33 are arranged at positions facing the openings of storage parts 41 of main body holder 4. In battery pack 100 in which battery cells 1 are cylindrical batteries, storage parts 41 and fitting recesses 33 of main body holder 4 have a cylindrical shape. In battery holder 2 of Figs. 1 and 2, battery cells 1 are inserted into storage parts 41 of main body holder 4 and arranged in a posture parallel to each other, and both ends of battery cells 1 are guided to fitting recesses 33 of insulating cover 3 and arranged at fixed positions. However, in the present invention, battery holder 2 is not limited to this configuration. For example, as in battery pack 200 illustrated in Fig. 6, lower insulating cover 3 may be integrated with main body holder 4, and only the upper opening of bottomed main body holder 4X may be covered with insulating cover 3.

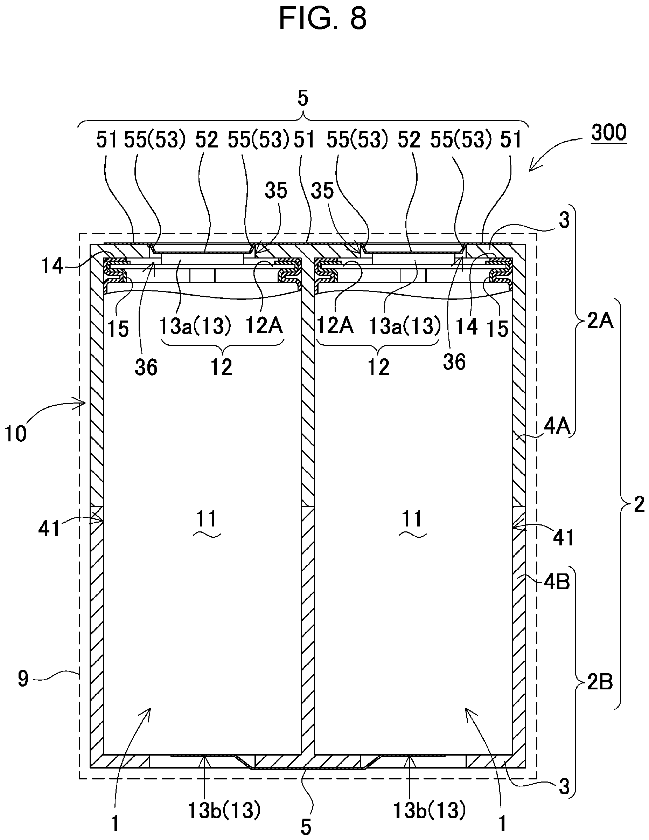

Battery holder 2 described above is assembled by connecting insulating cover 3 to main body holder 4 into which battery cells 1 are inserted with insulating cover 3 and main body holder 4 as separate members, but insulating cover 3 and divided main body holders 4A and 4B can also be molded into an integrated structure as in battery pack 300 illustrated in Fig. 8. In this structure, half of battery cell 1 is inserted into storage part 41 of one divided battery holder 2A constituting battery holder 2, and half of battery cell 1 is inserted into storage part 41 of other divided battery holder 2B, so that a pair of divided battery holders 2A and 2B can be coupled and assembled.

Insulating cover 3 is provided with connection windows 35 for connecting lead plate 5 at positions facing the end surfaces of battery cells 1. Both ends of cylindrical battery cell 1 are positive and negative electrodes 13. One electrode 13 of battery cell 1 is constituted by protrusion electrode 13a arranged in a central part of sealing plate 12, and other electrode 13 is constituted by bottom surface electrode 13b of outer covering can 11. Connection window 35 that guides lead plate 5 connected to protrusion electrode 13a is larger than the outer shape of protrusion electrode 13a, so that protrusion electrode 13a can be inserted inside. Since connection window 35 can be welded to protrusion electrode 13a with lead plate 5 arranged inside, the step between laminated part 51 arranged on the surface of insulating cover 3 and welded part 52 to protrusion electrode 13a can be reduced, and lead plate 5 can be welded to protrusion electrode 13a. Connection window 35 arranged at a position facing the bottom surface of outer covering can 11 is opened to a size capable of connecting lead plate 5 to bottom surface electrode 13b.

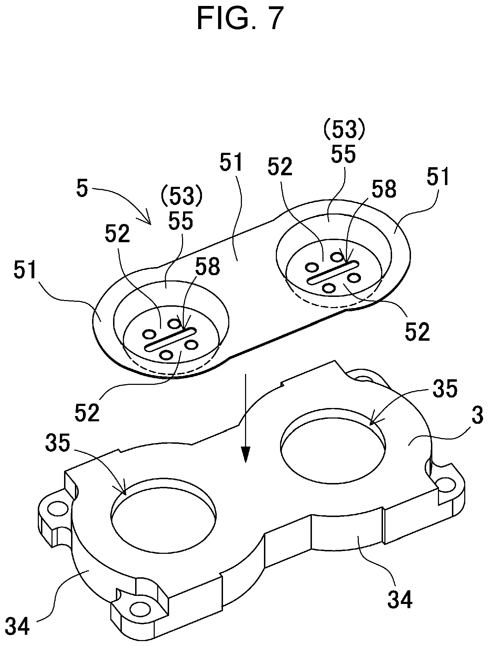

In battery cell 1 described above, electrode 13 of sealing plate 12 is formed as protrusion electrode 13a, but in battery cell 1, electrode 13 of sealing plate 12 is not necessarily formed as protrusion electrode 13a. In battery cell 1, as illustrated in Figs. 6 and 7, electrode 13 of sealing plate 12 can be formed as planar electrode 13c. Battery cell 1 is also pressed and sealed by caulking part 14 with insulating gasket 15 interposed between the outer peripheral edge part of sealing plate 12 and outer covering can 11. Since connection windows 35 that guide lead plate 5 connected to planar electrodes 13c allow lead plate 5 to be arranged inside, and lead plate 5 is welded to planar electrodes 13c, lead plate 5 can be welded to planar electrodes 13c by increasing the step between laminated part 51 arranged on the surface of insulating cover 3 and welded part 52 to planar electrode 13c.

### (Lead plate 5)

Lead plates 5 are welded to positive and negative electrodes 13 provided at both ends of battery cells 1 to connect battery cells 1 in series or in parallel. In battery pack 100 of Fig. 1, adjacent battery cells 1 are connected in parallel by lead plates 5. In battery pack 100, both ends of one of lead plates 5 are connected to protrusion electrodes 13a of adjacent battery cells 1, and the other of lead plates 5 is connected to bottom surface electrodes 13b of outer covering can 11. Lead plate 5 is welded and connected to electrodes 13 of battery cells 1 by a method such as spot welding, laser welding, or ultrasonic welding. A metal plate having good electrical conductivity is used for the lead plate 5, and for example, an iron plate whose surface is plated with nickel or the like, or a metal plate such as a nickel plate, a copper plate, or an aluminum plate can be suitably used. These metal plates are cut and bent to produce lead plate 5.

Lead plate 5 is arranged on a surface of insulating cover 3 by bending a metal plate after the metal plate is cut, and includes laminated parts 51 which connect battery cells 1 in series or in parallel, welded parts 52 which are welded to electrodes 13 of battery cells 1, and stepped parts which each connect welded part 52 and laminated part 51 to each other. Lead plate 5 has a stepped shape in which laminated part 51 and welded part 52 are not arranged on the same plane, and laminated part 51 is arranged on the surface of insulating cover 3 so that welded part 52 can be welded to electrode 13 of battery cell 1 inside connection window 35.

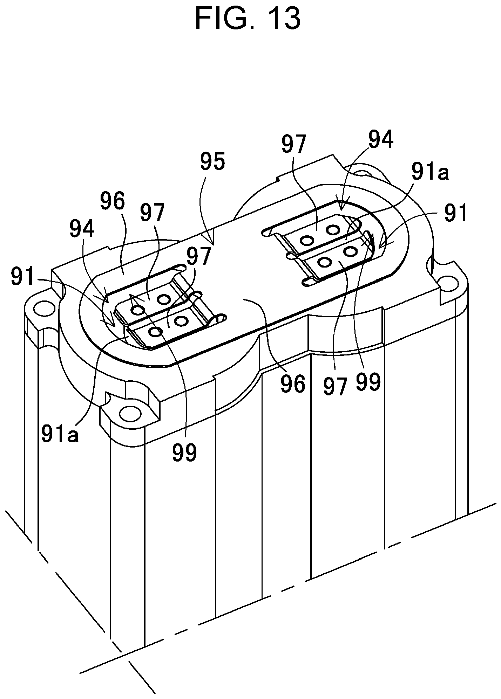

The reference perspective view of Fig. 13 illustrates a state in which conventional lead plate 95 is welded to protrusion electrodes 91a of battery cells 91. In lead plate 95 in this drawing, since welded part 97 protrudes into connection window 94 toward protrusion electrode 91a, gap 99 is formed between laminated part 96 and welded part 97. Gap 99 is a gap for exposing the insulating gasket sandwiched between the caulking part and the sealing plate. The gap through which the insulating gasket is exposed cannot prevent a thermal failure of the insulating gasket due to a high-temperature jetted matter discharged from other battery cells.

Lead plate 5 of Figs. 1 to 5 is provided with closing parts 53 that cover the exposed parts of insulating gaskets 15 and protect the exposed parts from the jetted matter. Closing part 53 closes exposure opening 36 which is a gap between insulating cover 3 and sealing plate 12. Fig. 4 is a plan view of battery assembly 10, in which a left half illustrates a state in which lead plate 5 is arranged, and a right half illustrates a state in which lead plate 5 is removed.

Closing part 53 that blocks exposure opening 36 covers the exposed part of insulating gasket 15 to prevent a thermal failure of the jetted matter. Lead plate 5 of Fig. 4 is provided with closing parts 53 each including closing stepped parts 55 and closing outer peripheral edges 56 along an inner periphery of connection window 35. Closing stepped parts 55 connect both side to welded part 52 and laminated part 51 to close exposure opening 36. closing outer peripheral edge 56 closes exposure opening 36 by bringing the outer peripheral edge of welded part 52 close to the inner peripheral edge of connection window 35.

In lead plate 5 illustrated in Figs. 3 and 4, two closing stepped parts 55 are provided at positions facing welded part 52, and closing outer peripheral edges 56 are provided between closing stepped parts 55. In closing stepped part 55 in this drawing, folding line 55a at a boundary between closing stepped part 55 and welded part 52 and folding line 55b at a boundary between closing stepped part 55 and laminated part 51 are linear. Since closing stepped part 55 is linear and closing outer peripheral edge 56 is arcuate in lead plate 5 in the drawing, insulating cover 3 in which lead plate 5 is set can close exposure opening 36 with closing part 53 by setting the inner shape of connection window 35 such that the region where closing stepped parts 55 are arranged on the inner side is set to be linear and the region where closing outer peripheral edges 56 are arranged on the inner side is set to be arcuate as indicated by bold chain lines in the right half of the plan view of Fig. 4. However, insulating cover 3 can close exposure opening 36 by making the inner shape of the entire connection window 35 circular and bringing both ends of linear closing stepped parts 55 close to the inner surface of connection window 35. In insulating cover 3, the inner surface shape of the region where both end edges of closing stepped parts 55 are arranged is set to a shape along the inner surface of closing stepped part 55, and the gap between closing stepped part 55 and the inner peripheral surface of connection window 35 is narrowed, so that exposure opening 36 can be more reliably closed. Even in insulating cover 3 in which a part of the inner peripheral edge of connection window 35 is made linear and closing stepped parts 55 are set in a linear region, the inner periphery of connection window 35 can also be molded into a shape approaching the inner surfaces of closing stepped parts 55 to more reliably close exposure opening 36.

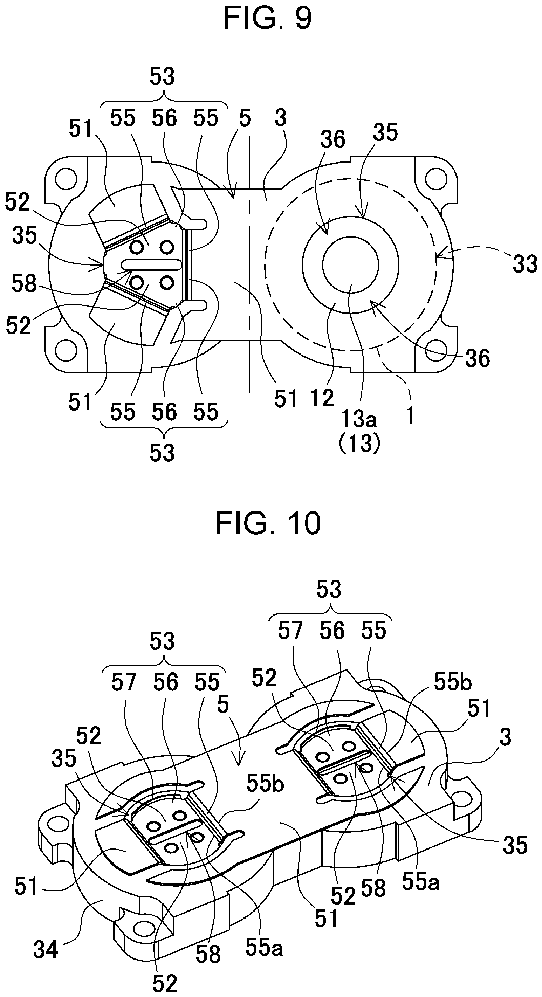

In lead plate 5 described above, two closing stepped parts 55 are provided at the facing positions. However, as illustrated in Fig. 9, three or more closing stepped parts 55 can be provided on the outer periphery of welded part 52. In lead plate 5 provided with the closing parts 53 each including closing stepped parts 55 and closing outer peripheral edges 56, as illustrated in Figs. 4 and 9, closing outer peripheral edges 56 are provided on welded part 52, and exposure opening 36 of insulating gasket 15 is closed by both closing stepped parts 55 and closing outer peripheral edges 56.

Further, as illustrated in Fig. 7, closing stepped part 55 can be provided on the entire outer periphery of welded part 52 without providing closing outer peripheral edge 56. In lead plate 5 in which closing stepped part 55 includes only closing part 53 without providing closing outer peripheral edge 56, closing stepped part 55 is provided on the entire outer periphery of welded part 52 to close exposure opening 36 of insulating gasket 15. Connection window 35 and welded part 52 illustrated in Fig. 7 are circular, and the outer diameter of welded part 52 is smaller than the inner diameter of connection window 35. Lead plate 5 has a circular cup shape with welded part 52 as a bottom surface, closing stepped part 55 as an outer peripheral wall, and laminated part 51 as an outer peripheral flange part. As illustrated in Fig. 6, even in battery cell 1 having a wide gap between insulating cover 3 and sealing plate 12, lead plate 5 having this shape can block exposure opening 36 in an ideal state to prevent a thermal failure of insulating gasket 15.

Further, closing outer peripheral edge 56 of lead plate 5 can close exposure opening 36 of insulating gasket 15 by bringing the outer peripheral edge close to the inner peripheral surface of connection window 35, but as illustrated in Fig. 10, closing outer peripheral edge 56 can provide closing wall 57 close to the inner peripheral surface of connection window 35 to face the inner peripheral surface of connection window 35. Since closing outer peripheral edge 56 closes exposure opening 36 while closing part 53 approaches the inner peripheral surface of connection window 35, there is an advantage that it is possible to more effectively prevent a thermal failure of insulating gasket 15 to a high-temperature jetted matter.

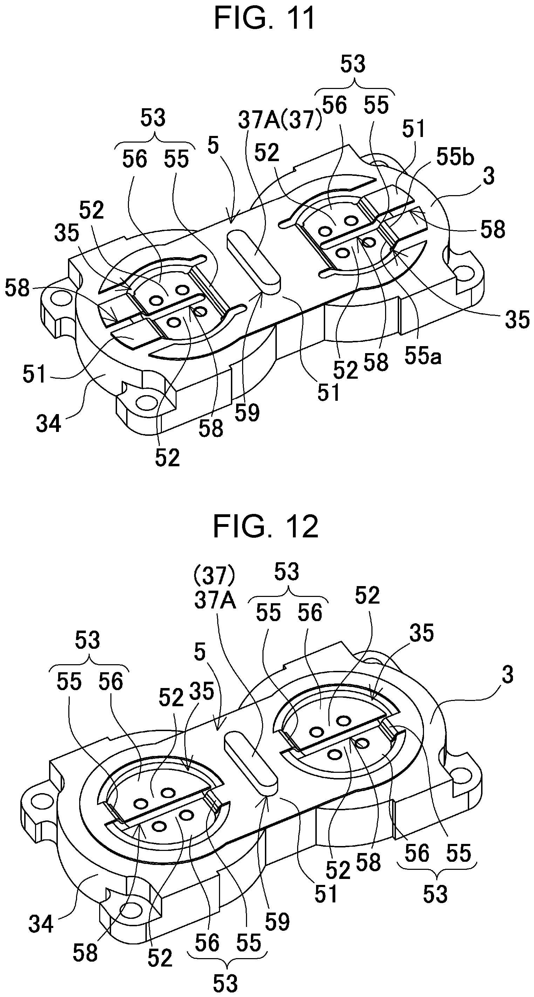

Lead plate 5 spot-welded to protrusion electrode 13a can be reliably welded while suppressing reactive current by providing slit 58 in welded part 52. This is because, in welded part 52, slit 58 can suppress reactive current flowing between a pair of spot welding electrodes by bringing the electrodes into contact with both sides of slit 58. As illustrated in Figs. 3 and 4, welded part 52 can have slit 58 provided only in welded part 52, or can have a length extending from welded part 52 to laminated part 51 as illustrated in the perspective view of Fig. 11. Slit 58 extending to laminated part 51 can further suppress reactive current of spot welding and perform spot welding more reliably. However, since slit 58 extending from welded part 52 to laminated part 51 is a gap that locally exposes a part of insulating gasket 15, the inner interval of slit 58 is set to a gap that can substantially close exposure opening 36 and prevent a thermal failure of insulating gasket 15 in consideration of reliability of spot welding and a thermal failure of insulating gasket 15.

As illustrated in Fig. 12, in lead plate 5 in which slit 58 is provided in welded part 52, slit 58 extending in the radial direction of protrusion electrode 13a is provided in welded part 52, welded part 52 is divided into two by slit 58, and closing stepped part 55 and closing outer peripheral edge 56 can be provided in each of the divided welded parts 52. Since, in welded part 52, welded parts 52 on both sides are divided by slit 58, the electrode of the spot welding can be brought into contact with the divided welded parts 52 so that lead plate 5 is reliably welded to protrusion electrode 13a with a smaller reactive current. However, welded part 52 of lead plate 5 can be welded not only by spot welding but also by a method such as laser welding or ultrasonic welding, and furthermore, spot welding can be performed without providing slit 58, so that it is not always necessary to provide slit 58 in welded part 52.

In lead plate 5, closing part 53 is provided on welded part 52 for protrusion electrode 13a of battery cell 1, and it is not necessary to provide closing part 53 on welded part 52 on a bottom surface of outer covering can 11 without insulating gasket 15. In battery pack 100 in which two battery cells 1 are connected in parallel, as illustrated in Fig. 3 and Fig. 4, closing parts 53 are provided on welded parts 52 on both sides of lead plate 5 to be welded to protrusion electrodes 13a. Lead plate 5 connected to bottom surface electrodes 13b of outer covering cans 11 weld welded parts 52 having no closing part to the bottom surfaces of outer covering cans 11 to connect outer covering cans 11 of battery cells 1 in parallel.

Lead plate 5 described above can be arranged at a fixed position of insulating cover 3 by a fitting structure. Insulating cover 3 illustrated in Figs. 11 and 12 includes fitting part 37 for arranging lead plate 5 at a fixed position in the fitting structure. Fitting part 37 of insulating cover 3 illustrated in the drawing is positioning protrusion 37A formed integrally with insulating cover 3. Lead plate 5 is provided with positioning hole 59 into which positioning protrusion 37A is inserted opened. In insulating cover 3 illustrated in the drawing, positioning protrusion 37A is integrally molded so as to protrude from the surface between two connection windows 35 opened on both sides. Positioning protrusion 37A illustrated in the drawing is formed in an oval shape in plan view and in a posture extending in a direction intersecting with the arrangement direction of two battery cells 1. Lead plate 5 is provided with positioning hole 59 that is opened between welded parts 52 connected to protrusion electrodes 13a of battery cells 1 on both sides and guides positioning protrusion 37Ato a central part of laminated part 51 laminated on a surface of insulating cover 3. As described above, by guiding directional positioning protrusion 37A to positioning hole 59 fitted with positioning protrusion 37A, leading plate 5 can be easily and accurately arranged at a fixed position of insulating cover 3.

### INDUSTRIAL APPLICABILITY

The battery pack according to the present invention can be suitably used as a power source for various uses as a battery pack in which the high-temperature jetted matter discharged from the discharge valve of the battery cell is suppressed from causing a thermal failure to other battery cells at the time of valve opening to improve safety.

### REFERENCE MARKS IN THE DRAWINGS

100, 200, 300: battery pack
1: battery cell
2: battery holder
2A, 2B: divided battery holder
3: insulating cover
4, 4A, 4B: main body holder
4X: bottomed main body holder
5: lead plate
9: outer covering case
10: battery assembly
11: outer covering can
12: sealing plate
12A: ring-shaped flat surface
13: electrode
13a: protrusion electrode
13b: bottom surface electrode
14: caulking part
15: insulating gasket
19: set screw
33: fitting recess
34: peripheral wall part
35: connection window
36: exposure opening
37: fitting part
37A: positioning protrusion
51: laminated part
52: welded part
53: closing part
55: closing stepped part
55a, 55b: folding line
56: closing outer peripheral edge
57: closing wall
58: slit
59: positioning hole
81: battery cell
82: electrode
85: lead plate
86: connection arm
89: gap
91a: protrusion electrode
94: connection window
95: lead plate
96: laminated part
97: welded part
99: gap

## Claims

1. A battery pack comprising:
a plurality of battery cells in each of which an outer peripheral edge of a sealing plate is fixed to an opening of an outer covering can by a caulking portion with an insulating gasket interposed therebetween;
an outer covering case incorporating the plurality of battery cells;
a lead plate that comprises metal, the lead plate being connected to electrodes of the sealing plates of adjacent battery cells among the plurality of battery cells to electrically connect the adjacent battery cells to each other; and
a battery holder in which the plurality of battery cells are arranged at fixed positions,
wherein the battery holder includes an insulating cover arranged at a position facing the sealing plates of the adjacent battery cells and arranged between the sealing plates of the adjacent battery cells and the lead plate,
wherein the insulating cover includes a connection window that exposes the electrode of one of the adjacent battery cells and connects the lead plate at a position facing the sealing plate of the one of the adjacent battery cells, and
wherein the lead plate includes
a welded part that is guided by the connection window and welded to the electrode of the one of the adjacent battery cells, and
a closing part that is arranged at the connection window and closes a gap between the insulating cover and the sealing plate of the one of the adjacent battery cells.

2. The battery pack according to Claim 1,
wherein the sealing plate of the one of the adjacent battery cells includes a protrusion electrode at a central part of the sealing plate of the one of the adjacent battery cells, and
wherein the welded part is welded to the protrusion electrode exposed from the connection window of the insulating cover, and a gap between the insulating cover and the protrusion electrode is closed by the closing part.

3. The battery pack according to Claim 1 or 2,
wherein the lead plate includes a laminated part arranged on a surface of the insulating cover,
wherein the closing part includes a closing stepped part connecting a first side edge of the closing stepped part to the laminated part and connecting a second side edge of the closing stepped part to the welded part, and
wherein the closing stepped part closes the gap between the insulating cover and the sealing plate of the one of the adjacent battery cells.

4. The battery pack according to Claim 3, wherein the lead plate includes a pair of closing stepped parts connected to the welded part, the pair of closing stepped parts including the closing stepped part.

5. The battery pack according to Claim 3 or 4, wherein a boundary line between the closing stepped part and the welded part and a boundary line between the closing stepped part and the laminated part are linear.

6. The battery pack according to Claim 2, wherein the closing part includes a closing outer peripheral edge that is close to an inner peripheral edge of the connection window and closes the gap between the insulating cover and the sealing plate of the one of the adjacent battery cells.

7. The battery pack according to Claim 6, wherein the connection window and the closing outer peripheral edge include a curved shape along an outer peripheral edge of the protrusion electrode.

8. The battery pack according to Claim 6 or 7, wherein the closing outer peripheral edge includes a closing wall arranged close to an inner peripheral edge of the connection window.

9. The battery pack according to Claim 6 or 7,
wherein the lead plate includes a laminated part arranged on a surface of the insulating cover,
wherein the closing part includes
a plurality of closing stepped parts each connecting a first side edge of a corresponding one of the plurality of closing stepped parts to the laminated part and connecting a second side edge of the corresponding one of the plurality of closing stepped parts to the welded part to close a gap between the insulating cover and the protrusion electrode, and
a plurality of closing outer peripheral edges including the closing outer peripheral edge, and
wherein the closing outer peripheral edge is provided between the plurality of closing stepped parts.

10. The battery pack according to Claim 3,
wherein the connection window and the welded part are circular,
wherein an outer diameter of the welded part is smaller than an inner diameter of the connection window, and
wherein the lead plate includes a circular cup shape with the welded part as a bottom surface, the closing stepped part as an outer peripheral wall, and the laminated part as a flange part on an outer periphery.

11. The battery pack according to any one of Claims 1 to 10, wherein the insulating cover is molded integrally with the battery holder.

12. The battery pack according to any one of Claims 1 to 11, wherein the insulating cover comprises plastic as an insulating material.

13. The battery pack according to any one of Claims 1 to 10,
wherein the insulating cover includes
a fitting recess into which one of the plurality of battery cells is inserted and arranged at a fixed position, and
a fitting part arranging the lead plate at a fixed position in a fitting structure.

14. The battery pack according to Claim 13,
wherein the fitting part of the insulating cover is a positioning protrusion formed integrally with the insulating cover, and
wherein the lead plate includes a positioning hole into which the positioning protrusion is inserted.
